# EUROPÄISCHE PATENTANMELDUNG

(11) **EP 2 124 018 A1**
(43) Veröffentlichungstag der Anmeldung: **25.11.2009**
(21) Anmeldenummer: 08156670.5
(22) Anmeldetag: 21.05.2008
(51) Int. Cl.: G01C 9/00, G01F 23/00

(54) **Füllstandsmessung in mobilen Behältern oder Transportsilos**

(71) Anmelder: VEGA Grieshaber KG, 77709 Wolfach (DE)
(72) Erfinder: Faist, Fridolin, 77709, Oberwolfach (DE)
(74) Vertreter: Maiwald Patentanwalts GmbH

(57) **Zusammenfassung**

Gemäß einem Ausführungsbeispiel der Erfindung wird zur Bestimmung eines Füllstands in einem mobilen Behälter oder in einem Transportsilo ein Lagesensor verwendet, der den Neigungswinkel des Behälters messen kann. Die Füllstandsdaten werden über einen Füllstandsensor aufgenommen. Anhand der Messdaten des Lagesensors kann erkannt werden, ob die Füllstandmessung gültig ist oder nicht. Auf diese Weise können Fehlmessungen verworfen werden.

## Beschreibung

### Gebiet der Erfindung

Die Erfindung betrifft die Füllstandmessung. Insbesondere betrifft die Erfindung eine Füllstandmessvorrichtung zur Bestimmung eines Füllstands in einem mobilen Behälter oder in einem Transportsilo, ein Füllstandmesssystem mit einer solchen Füllstandmessvorrichtung sowie ein Verfahren zur Bestimmung eines Füllstands.

### Technologischer Hintergrund

Heutige mobile Behälter und Transportsilos verfügen nur selten über eine Füllstandmessung, da viele bisherige Messsysteme kaum verfügbar und nur wenig wirtschaftlich einsetzbar sind.

Bei mobilen Behältern oder Transportsilos ist es häufig so, dass diese für den Transport oder für die Wartungsarbeiten bewegt werden, wodurch ungültige Füllstandsinformationen gemessen werden, die den tatsächlichen Behälterfüllstand nicht richtig wiedergeben können.

### Zusammenfassung der Erfindung

Es ist eine Aufgabe der Erfindung, eine verbesserte Bestimmung eines Füllstands bei mobilen Behältern und bei Transportsilos bereitzustellen.

Es sind eine Füllstandmessvorrichtung zur Bestimmung eines Füllstands in einem mobilen Behälter oder in einem Transportsilo, ein Füllstandmesssystem sowie ein Verfahren zur Bestimmung eines Füllstands in einem mobilen Behälter oder in einem Transportsilo gemäß den Merkmalen der unabhängigen Ansprüche angegeben. Weiterbildungen der Erfindung ergeben sich aus den Unteransprüchen.

Gemäß einem Ausführungsbeispiel der Erfindung ist eine Füllstandmessvorrichtung zur Bestimmung eines Füllstands in einem mobilen Behälter oder in einem Transportsilo angegeben, welcher einen Füllstandsensor zur Erfassung von ersten Messdaten aufweist, die mit dem Füllstand in dem Behälter korrespondiert. Weiterhin ist ein Lagesensor zur Erfassung von zweiten Messdaten vorgesehen, die mit einer Betriebslage des Behälters korrespondieren, wobei anhand der zweiten Messdaten feststellbar ist, ob die Betriebslage des Behälters für eine Füllstandsbestimmung mit dem Füllstandsensor geeignet ist.

Die Füllstandmessvorrichtung zur Erfassung der Füllstandsinformation berücksichtigt also, ob der aktuelle Messwert gültig ist oder nicht. Die Auswertung der Daten des Lagesensors sowie der Daten des Füllstandsensors kann innerhalb der Füllstandmessvorrichtung erfolgen oder in einer externen Auswerteeinheit, die beispielsweise an einem Server angeschlossen oder in diesem Server integriert ist.

Wird der mobile Behälter bzw. das Transportsilo also beispielsweise für den Transport oder für die Durchführung von Wartungsarbeiten in einen gekippten Zustand gebracht, detektiert der Lagesensor diesen Kippzustand, woraufhin (von der Füllstandmessvorrichtung selber oder von einem externen System) feststellbar ist, ob die zu diesem Zeitpunkt gemessene Füllstandsdaten Gültigkeit besitzen oder nicht. Dies ist insbesondere dann vorteilhaft, wenn die Messzyklen und Übertragungszyklen für die Messdaten einem festen Zeitraster folgen, so dass während der Transportzeiten oder Wartungsarbeiten teilweise ungültige Füllstandsinformationen erfasst und beispielsweise an den Server übertragen werden.

Erfindungsgemäß können diese ungültigen Füllstandsinformationen von den gültigen Füllstandsinformationen unterschieden werden.

Der Füllstand wird beispielsweise nur dann als gültig angezeigt, wenn sich der Behälter bzw. das Silo in einer vorgesehenen, definierbaren Betriebslage befinden.

An dieser Stelle sei angemerkt, dass die vorher und im Folgenden beschriebenen Ausführungsbeispiele gleichermaßen die Füllstandmessvorrichtung, das Füllstandmesssystem und das Verfahren betreffen.

Gemäß einem weiteren Ausführungsbeispiel der Erfindung ist der Lagesensor zum Erfassen eines Neigungswinkels des Behälters bzw. des Transportsilos ausgeführt.

Der Lagesensor kann also genau bestimmen, zu welchem Zeitpunkt sich der Behälter in einer bestimmten Neigungslage befindet. In einem anderen Ausführungsbeispiel kann der Lagesensor dazu ausgeführt sein, diskrete Neigungszustände des mobilen Behälters bzw. des Transportsilos zu detektieren. Beispielsweise kann der Lagesensor ausgeführt sein, ein aufrechte Stehen des Behälters und ein um 90° verkipptes Liegen des Behälters zu detektieren. In diesem Fall ist der Lagesensor besonders einfach ausgeführt.

Beispielsweise ist die Füllstandmessvorrichtung bzw. das Füllstandmesssystem in der Lage, einen bestimmten, von einem Benutzer vorgebbaren Winkelbereich (beispielsweise Neigungswinkel des Behälters zwischen +10° und -10° oder zwischen +5° und -5°), in dem sich der Behälter befindet, zu detektieren und als "gültige Betriebslage des Behälters" zu identifizieren. Wird der Behälter stärker verkippt, wird hingegen eine "ungültige Betriebslage des Behälters" identifiziert. In diesem Fall kann es sich bei dem Neigungssensor um einen Sensor zur Erfassung diskreter Neigungswerte handeln.

Gemäß einem weiteren Ausführungsbeispiel der Erfindung weist die Füllstandmessvorrichtung weiterhin eine Auswerteeinheit zur Bestimmung des Füllstands auf Basis der ersten Messdaten und der zweiten Messdaten auf.

Gegebenenfalls kann der Lagesensor oder aber auch der Füllstandsensor bereits eine Vorbearbeitung oder Analyse der erfassten Messdaten vornehmen, deren Ergebnis dann an die Auswerteeinheit übergeben wird. Die Auswerteeinheit analysiert (falls noch erforderlich) daraufhin die empfangenen ersten und zweiten (gegebenenfalls aufbereiteten) Messdaten und bestimmt daraus den Füllstand. Füllstandmessungen, welche mit ungültigen Betriebslagen des Behälters korrespondieren, werden beispielsweise als ungültig gekennzeichnet und verworfen oder als ungültig gespeichert.

Die Auswerteeinheit kann auch in einem externen Empfänger angeordnet bzw. an einen externen Empfänger angeschlossen sein.

Gemäß einem weiteren Ausführungsbeispiel der Erfindung ist die Auswerteeinheit zur genauen Bestimmung des Füllstands auch bei gekipptem Behälter ausgeführt.

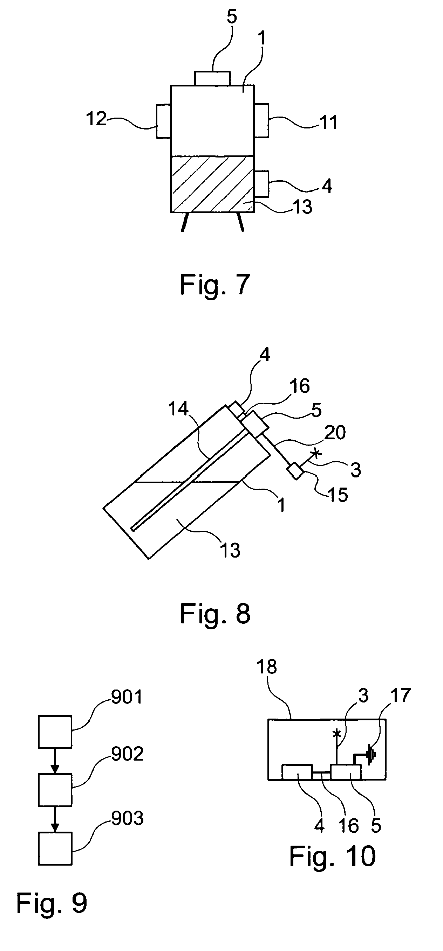

Dieses Ausführungsbeispiel ist beispielsweise in Fig. 8 gezeigt. Bei dem Füllstandsensor handelt es sich in diesem Fall zum Beispiel um eine Stabsonde, die in das Füllgut eintaucht. Es kann sich aber auch um einen entlang einer Führungsstange geführten Schwimmsensor handeln.

Aus den Messdaten des Füllstandsensors und den Lagedaten des Lagesensors (Neigungswinkel des Behälters) kann der Füllstand errechnet werden. Hierfür ist die Kenntnis der Behältergeometrie erforderlich.

Gemäß einem weiteren Ausführungsbeispiel der Erfindung handelt es sich bei dem Füllstandsensor um einen Radarsensor, einen Drucksensor, einen Ultraschallsensor, einen Grenzstandsensor oder um einen kapazitiven Sensor.

Gemäß einem weiteren Ausführungsbeispiel der Erfindung weist die Füllstandmessvorrichtung weiterhin eine Kommunikationseinheit zum Übertragen von Messsignalen in einen Empfänger auf, wobei die Messsignale auf den ersten und zweiten Messdaten basieren.

Gegebenenfalls werden die ersten und zweiten Messdaten innerhalb der Füllstandmessung vorausgewertet und anderweitig bearbeitet, bevor sie dann in Form der Messsignale an den Empfänger übertragen werden. Auch können die ersten und zweiten Messdaten als "Rohdaten" direkt an den Empfänger übertragen werden, der dann die Analyse vollständig selber ausführt.

Auf diese Weise kann die Rechenleistung vollständig zum Empfänger hin verlagert werden.

Gemäß einem weiteren Ausführungsbeispiel der Erfindung weist der Füllstandsensor eine Schnittstelle zum Anschluss an den Lagesensor auf, wobei der Füllstandsensor zum Entgegennehmen der zweiten Messdaten von dem Lagesensor und zum Übertragen der Messsignale in digitalisierter Form an die Kommunikationseinheit des Empfängers ausgeführt ist.

Gemäß einem weiteren Ausführungsbeispiel der Erfindung sind der Füllstandsensor, der Lagesensor, die Kommunikationseinheit und die Batterie zur Energieversorgung der Sensoren und der Kommunikationseinheit in einem gemeinsamen Gehäuse integriert.

Auf diese Weise kann ein kompaktes, widerstandsfähiges Messmodul bereitgestellt werden, welches als Einzelbauteil auf den Behälter bzw. Silo angebracht wird.

Gemäß einem weiteren Ausführungsbeispiel der Erfindung erfolgt eine Auswertung der ersten Messdaten und der zweiten Messdaten im Empfänger.

Gemäß einem weiteren Ausführungsbeispiel der Erfindung weist die Füllstandmessvorrichtung weiterhin einen zweiten Füllstandsensor auf, der so an dem Behälter angeordnet ist, dass er eine Ersatzmessung durchführen kann, wenn die Betriebslage des Behälters für eine Füllstandsbestimmung mit dem ersten Füllstandsensor nicht geeignet ist.

Auf diese Weise kann der Füllstand auch dann gemessen werden, wenn der erste Sensor aufgrund der starken Verkippung des Behälters "versagt".

Gemäß einem weiteren Ausführungsbeispiel der Erfindung ist ein Füllstandmesssystem zur Bestimmung eines Füllstands in einem mobilen Behälter oder in einem Transportsilo angegeben, welches eine oben beschriebene Füllstandmessvorrichtung sowie einen Empfänger zum Empfang von Messsignalen von der Füllstandmessvorrichtung, die auf den ersten und zweiten Messdaten basiert, aufweist.

Gemäß einem weiteren Ausführungsbeispiel der Erfindung handelt es sich bei dem Empfänger um einen zentralen Server. Auf diese Weise können Messsignale von vielen verschiedenen, über die ganze Welt verteilten Füllstandmessvorrichtungen entgegengenommen und verwaltet werden.

Gemäß einem weiteren Ausführungsbeispiel der Erfindung ist die Füllstandmessvorrichtung zur Übermittlung der Messsignale an den Empfänger über eine kabellose Verbindung über das Internet ausgeführt.

Gemäß einem weiteren Ausführungsbeispiel der Erfindung ist die Füllstandmessvorrichtung zur Durchführung mehrerer Messzyklen ausgeführt, wobei die Füllstandmessvorrichtung zu einer paarweisen Abspeicherung der Messsignale aus jedem der Messzyklen und zur darauffolgenden Übermittlung der gesammelten Messsignale an den Empfänger ausgeführt ist.

Gemäß einem weiteren Ausführungsbeispiel der Erfindung ist der Empfänger zum Speichern von Füllstandsinformationen und der festgestellten Eignung der Betriebslage des Behälters auf Basis der empfangenen Messsignale zusammen mit einem Zeitstempel ausgeführt, so dass ein Benutzer zu einem späteren Zeitpunkt auf alle im Empfänger eingegangenen Füllstandsinformationen zugreifen kann.

Beispielsweise kann auf diese Weise im Nachhinein festgestellt werden, wann der Behälter und in welchem Maße der Behälter verkippt wurde.

Gemäß einem weiteren Ausführungsbeispiel der Erfindung ist ein Verfahren zur Bestimmung eines Füllstands in einem mobilen Behälter oder in einem Transportsilo angegeben, bei dem erste Messdaten, die mit dem Füllstand in dem Behälter korrespondieren, erfasst werden. Weiterhin werden zweite Messdaten, die mit einer Betriebslage des Behälters korrespondieren, erfasst. Daraufhin wird anhand der ersten und zweiten Messdaten festgestellt, ob die Betriebslage des Behälters für eine Füllstandsbestimmung mit dem Füllstandsensor geeignet ist.

Im folgenden werden mit Verweis auf die Figuren bevorzugte Ausführungsbeispiele der Erfindung beschrieben.

### Kurze Beschreibung der Figuren

Fig. 1 zeigt eine Querschnittsdarstellung eines Füllstandmesssystems gemäß einem Ausführungsbeispiel der Erfindung.

Fig. 2 zeigt die Visualisierung der Messdaten gemäß einem Ausführungsbeispiel der Erfindung.

Fig. 3 zeigt eine Visualisierung der Messdaten gemäß einem weiteren Ausführungsbeispiel der Erfindung.

Fig. 4 zeigt eine Visualisierung der Messdaten gemäß einem weiteren Ausführungsbeispiel der Erfindung.

Fig. 5 zeigt eine Visualisierung der Messdaten gemäß einem weiteren Ausführungsbeispiel der Erfindung.

Fig. 6 zeigt ein Füllstandmesssystem gemäß einem weiteren Ausführungsbeispiel der Erfindung.

Fig. 7 zeigt eine Füllstandmessvorrichtung gemäß einem Ausführungsbeispiel der Erfindung.

Fig. 8 zeigt eine weitere Füllstandmessvorrichtung gemäß einem weiteren Ausführungsbeispiel der Erfindung.

Fig. 9 zeigt ein Flussdiagramm eines Verfahrens gemäß einem Ausführungsbeispiel der Erfindung.

Fig. 10 zeigt eine Füllstandmessvorrichtung gemäß einem weiteren Ausführungsbeispiel der Erfindung.

Fig. 11 zeigt Funktionsblöcke für Füllstandmessvorrichtungen.

Fig. 12 zeigt einen Behälter mit Füllstandsmessvorrichtung.

Fig. 13 und Fig. 14 zeigen eine Linearisierung der Messwerte.

Fig. 15 zeigt die Wertzuweisungen für skalierte Anzeigewerte.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

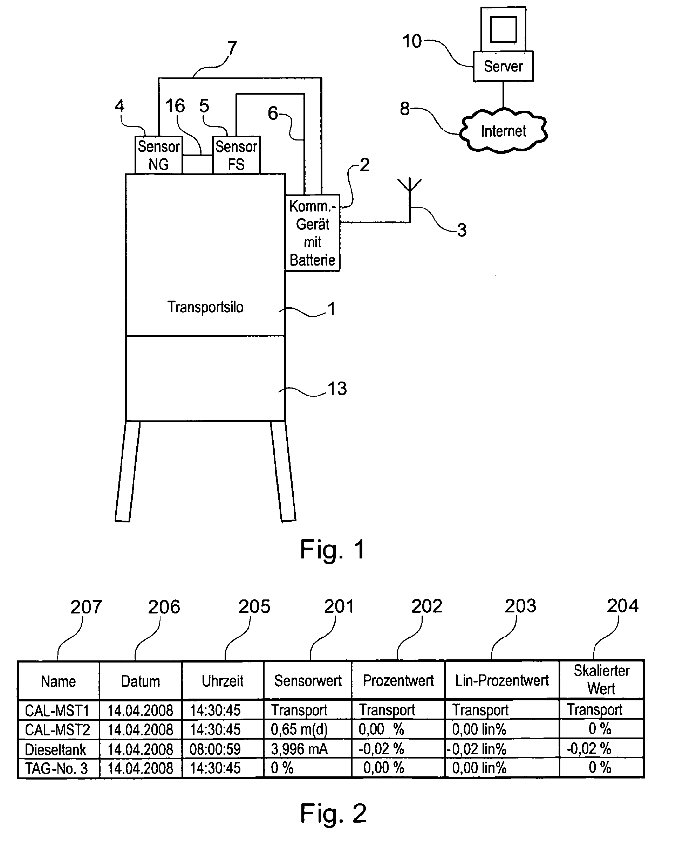

Fig. 1 zeigt ein Füllstandmesssystem gemäß einem Ausführungsbeispiel der Erfindung.

Das Füllstandmesssystem weist einen Füllstandsensor 5, einen Neigungssensor 4 und ein Kommunikationsgerät mit einer Batterie 2 auf. Das Kommunikationsgerät 2 ist über entsprechende Datenleitungen 6, 7 mit dem Füllstandsensor 5 bzw. dem Neigungssensor 4 verbunden. Auch können die beiden Sensoren 4, 5 über eine Schnittstelle 16 miteinander verbunden sein. In diesem Fall ist gegebenenfalls nur eine der beiden Datenleitungen 6, 7 zum Kommunikationsgerät 2 erforderlich.

Das Kommunikationsgerät 2 ist an eine Antenne 3 angeschlossen, über welches es mit dem zentralen Server 10 über eine kabellose Kommunikationsverbindung, beispielsweise über das Internet 8, kommunizieren kann.

Die Sensoren 4, 5 sind an dem mobilen Behälter bzw. dem Transportsilo 1 angebracht. Das Transportsilo ist mit einem Füllgut 13 gefüllt.

Bei dem Kommunikationsgerät 2 handelt es sich um ein autarkes Kommunikationsgerät, welches über eine batteriegestützte Versorgung, wahlweise analoge oder digitale Messeingänge sowie eine Anbindung an Mobilfunksysteme, beispielsweise über GPRS (General Packet Radio Service) oder GSM (Global System for Mobile Communications) verfügt.

Über die Mobilfunkverbindung können die Messwerte via Internet an den Server 10 zur Weiterverarbeitung geleitet werden. Das Kommunikationsgerät 2 verfügt beispielsweise über ein geeignetes Leistungs-Management (Power-Management). Das heißt, dass die Sensoren 4, 5 zyklisch für eine Messung aktiviert werden bzw. sich selber aktivieren und dann wieder für längere Zeit in einen Stromsparmodus zurückwechseln.

Auch die Übertragung der Messwerte zum Server 10 erfolgt nur für eine definierte Übertragungsperiode mit anschließenden Wechseln in den Stromsparmodus. Die Wiederholrate für eine Messung und für eine Übertragungsperiode kann im Kommunikationsgerät 2 programmiert werden. Typische Werte sind beispielsweise eine Messung je Stunde und eine Übertragungsperiode je Tag. Die einzelnen Messungen werden hierbei gesammelt und während der Übertragungsperiode in einen Messwertblock übertragen.

Zur Bestimmung des Füllstands in dem mobilen Behälter bzw. Transportsilo 1 werden alle heutigen gängigen Messsysteme wie Drucksensoren, Radar- oder Ultraschallsensoren, oder auch kapazitive Messsysteme oder Wägemesssysteme eingesetzt. Das Kommunikationsgerät erfasst die Füllstandsinformation entweder über analoge Strom- bzw. Spannungseingänge oder aber über digitale Eingänge. Das Kommunikationsgerät 2 leitet dann diese Informationen entweder direkt an den Server weiter oder skaliert die Werte zuvor auf einen gewünschten Wertebereich um, bevor sie die Werte an den Server überträgt.

Zusätzlich zu den oben beschriebenen Füllstandsensoren und dem Kommunikationsgerät wird ein Inklinometer (Neigungssensor) 4 eingesetzt. Das Inklinometer 4 liefert während der Messung der Füllstände die erforderliche Information zum Neigungszustand des Transportsilos bzw. des mobilen Behälters 1. Anhand dieser Information kann dann der erfassten Füllstandsinformation ein Status "Betriebslage des Behälters ist gültig" bzw. "Betriebslage des Behälters ist ungültig" mitgegeben werden. So kann die Gültigkeit der Füllstandsinformationen, die an den Server übermittelt werden, auf einfache Weise kenntlich gemacht und für die spätere Auswertung nutzbar gemacht werden.

In anderen Worten werden also Füllstandsmessdaten mit einer Neigungsmessung in dem mobilen Behälter oder Transportsilo kombiniert. Das Transportsilo 1 ist hierbei mit dem Sensor 5 zur Füllstandmessung und einem zweiten Sensor 4 zur Bestimmung der Behälterneigung ausgestattet. Die beiden Messsignale werden über die Verbindungen 6 und 7 den Eingängen des Kommunikationsgeräts 2 zugeführt. Das Kommunikationsgerät 2 speichert die beiden Messsignale paarweise aus jedem Messzyklus ab und übermittelt die gesammelten Messwerte zu voreingestellten Zeitpunkten blockweise über die Mobilfunkverbindung 3 über das Internet 8 an den Server 10. Bei dem Server 10 kann es sich beispielsweise um einen Server, wie er für die Messwerterfassungssysteme WEB-VV der Firma VEGA Grieshaber KG eingesetzt wird, handeln.

Im Server 10 werden alle eingehenden Füllstandsinformationen zusammen mit einem Zeitstempel und dem festgestellten Status "Betriebslage des Behälters ist gültig" bzw. "Betriebslage des Behälters ist nicht gültig" gespeichert und zu einem Archiv zusammengefasst. Auf diese Weise kann zu einem späteren Zeitpunkt Zugriff auf alle jeweils beim Server eingegangenen Daten erfolgen.

Der Zugriff auf den Server 10 befindlichen Daten kann beispielsweise ebenfalls über das Internet erfolgen. Hierfür ist der Server zusätzlich mit einem Webserver ausgestaltet, der den Benutzer verschiedene Darstellungsformen zur Messwertanzeige bietet.

Darstellungsformen für die aufbereiteten Messdaten sind in den Fign. 2 bis 5 gezeigt.

Fig. 2 zeigt eine tabellarische Darstellungsform, welche den Prozess abbildet. Für gültige Betriebslagen des Behälters werden die Füllstandmesswerte in Spalte 201, die entsprechenden Prozentwert in Spalte 202, die Lin-Prozentwerte in Spalte 203 und die skalierten Werte in Spalte 204 dargestellt. Uhrzeit und Datum der Messungen werden jeweils in den Spalten 205 bzw. 206 dargestellt. Die Felder in der Spalte 207 bezeichnen die unterschiedlichen Behälter.

Typischerweise erfassen Sensoren zur Füllstandsmessung den aktuellen Füllstand in der dem jeweiligen Messprinzip eigenen physikalischen Einheit. So erfassen berührunglos messende Systeme wie Ultraschall- oder Radarsensoren einen Distanzwert (Einbauposition zu Füllgutoberfläche) in Meter, druckmessende Systeme erfassen beispielsweise den hydrostatischen Druck in Bar.

Diese Messwerte in der physikalischen Einheit werden als Sensorwerte bezeichnet. In der Regel gewinnt man aber aus diesen Informationen noch keine Kenntnis über den daraus resultierenden prozentualen Füllstand.

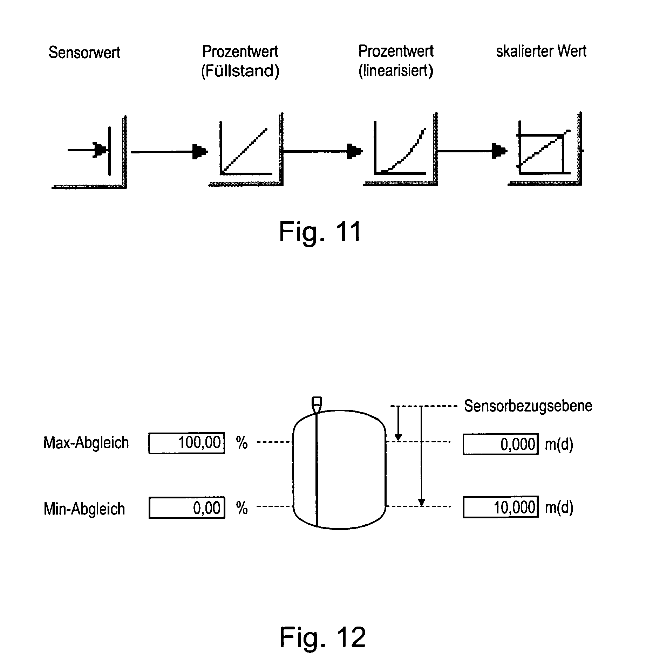

Fig. 11 zeigt Funktionsblöcke für Füllstandmessvorrichtungen, welche die Sensoren zur Weiterverarbeitung der Sensorwerte bereitstellen.

Damit ein Sensor (oder ein nachgeschaltetes Gerät) den prozentualen Füllstand errechnen, kann muss eine Parametrierung des Sensors (oder des nachgeschalteten Geräts) beispielsweise in folgender Weise erfolgen:

Der Ultraschallsensor ist bündig mit Behälterdecke montiert, der Behälter ist 10 m hoch (gemessen ab dem Behälterboden).

| Parametrierung: | | | |
|---|---|---|---|
| Sensorwert: | 0 m | entspricht | Prozentwert (Füllstand) 100% |
| Sensorwert: | 10 m | entspricht | Prozentwert (Füllstand) 0% |

Dies ist in Fig. 12 gezeigt.

Anhand dieser beiden Wertepaare kann der Sensor die Geradenfunktion für alle Zwischenwerte bestimmen.

Nachgelagert zur Ermittlung der Prozentwerte (Füllstand) können über eine weitere Umrechnung anhand einer programmierbaren Linearisierungsfunktion die sogenannten lin% Prozentwerte (Volumen oder eben linearisiert) errechnet werden. Die Programmierung der Linearisierungsfunktion kann durch die Auswahl einer bestimmten Behältergeometrie oder durch die Eingabe einer Linearisierungstabelle erfolgen.

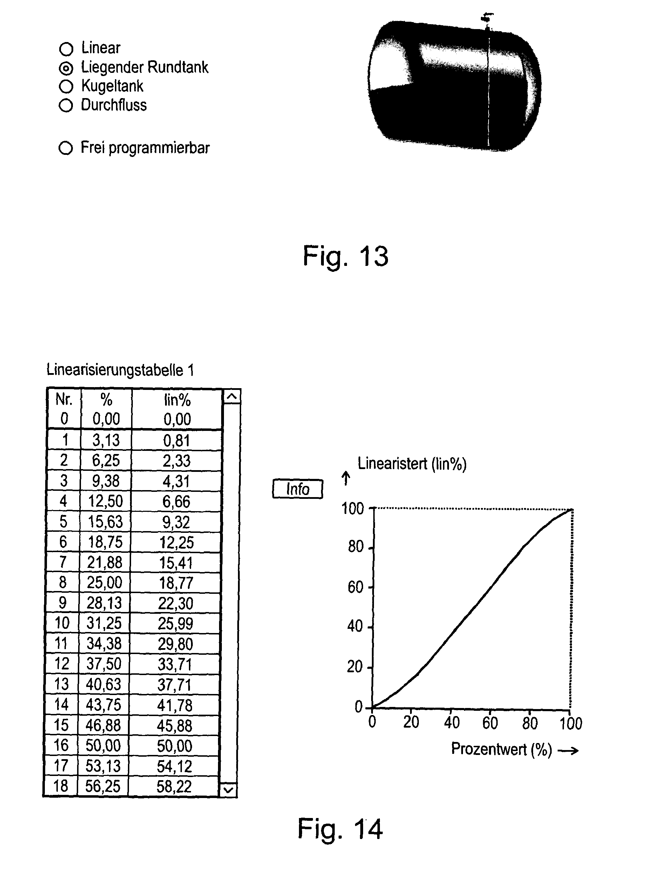

Diese Linearisierung ist in den Fig. 13 und 14 gezeigt.

Die lin%-Werte geben also relative Auskunft über die tatsächlich im Behälter befindliche Füllmenge.

Will man nun die absolut im Behälter befindliche Füllmenge wissen, so besteht in den Sensoren (oder nachgeschalteten Geräten) weiterhin die Möglichkeit die lin%-Werte zu skalieren.

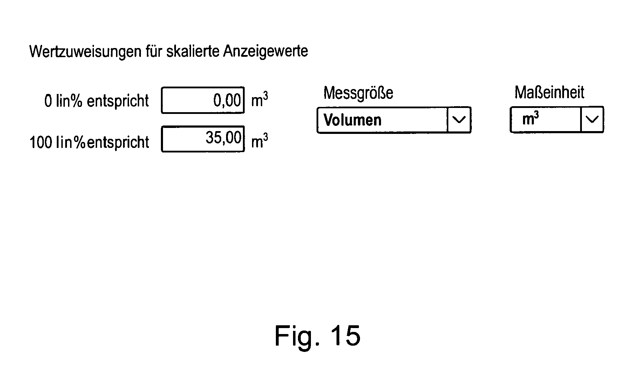

Fig. 15 zeigt die Wertzuweisungen für skalierte Anzeigewerte.

Basierend auf den lin%-Werten kann hierbei die Umrechnung anhand der beiden Wertepaare über die zugehörige Geradenfunktion erfolgen.

Stellt das System fest, dass die Füllstandsmessdaten ungültig sind, weil die Betriebslage des Behälters ungültig ist, wird in die entsprechenden Felder der Spalten 201 bis 204 "Transport" eingetragen.

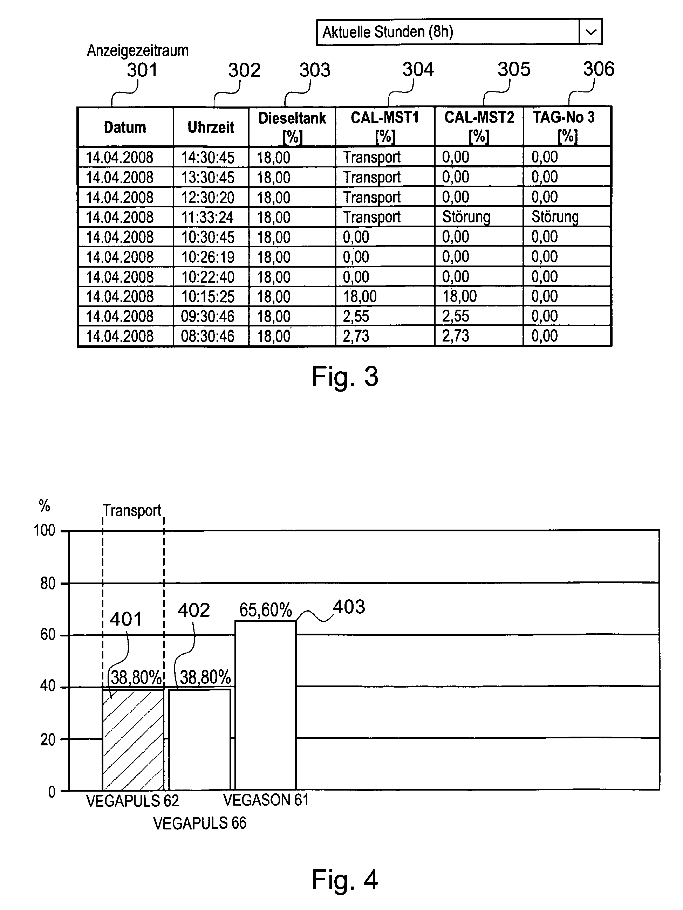

Fig. 3 zeigt ein weiteres Ausführungsbeispiel einer Darstellungsform. Hier ist der Historienverlauf tabellarisch dargestellt. In den Spalten 301 und 302 sind Datum bzw. Uhrzeit eingetragen. In den Spalten 303 bis 306 sind die Füllstandmesswerte der einzelnen Behälter, gegebenenfalls nach einer entsprechenden Aufbereitung, eingetragen, falls die Betriebslage des entsprechenden Behälters gültig ist. Im Falle, dass die Betriebslage des Behälters als ungültig identifiziert wurde, ist in den Feldern der Text "Transport" eingetragen. Liegt eine Störung des Messsystems vor, ist "Störung" eingetragen.

Die Anzeige in der Tabelle der Fig. 3 erfolgt über die letzten 8 Stunden, wobei der Anzeigezeitraum vom Benutzer wählbar ist.

Fig. 4 zeigt eine dritte Darstellungsform der Messdaten, diesmal graphisch als Prozessabbild in Form von Balken. Für gültige Betriebslagen des Behälters werden die Messwerte als Balken 402, 403 dargestellt (38,80 % bzw. 65,60 %). Für ungültige Betriebslagen des Behälters (siehe Balken 401) wird der jeweils letzte gültige Messwert (hier 38,80 %) als Balken mit einem Zusatztext "Transport" dargestellt. Optional kann der Balken schraffiert sein und/oder Hilfslinien zur Verdeutlichung des Status aufweisen.

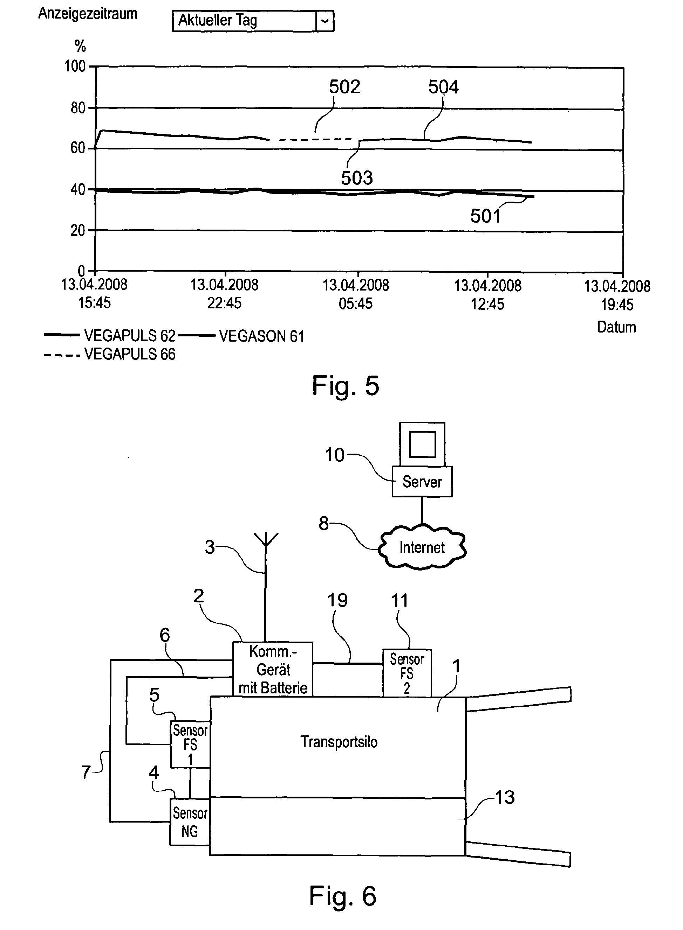

Fig. 5 zeigt ein weiteres Ausführungsbeispiel für eine Darstellung der Messdaten in Form eines Historienverlaufes als Diagramm bzw. als Liniengraphik. Für gültige Betriebslagen des Behälters können die Messwerte als Linie 501 dargestellt werden. Für ungültige Betriebslagen des Behälters wird die Messlinie in dem entsprechenden Zeitintervall 502 als gestrichelte Linie in Höhe des letzten gültigen Messwerts dargestellt. Wechselt die Betriebslage des Behälters dann zum Zeitpunkt 503 wieder in eine gültige Betriebslage, werden die Messwerte wieder als durchgezogene Linie 504 dargestellt.

Selbstverständlich kann für die Wahl der Kennzeichnung "Betriebslage des Behälters ist ungültig" auch eine andere textuelle oder graphische Anzeige gewählt werden.

Fig. 6 zeigt ein Transportsilo 1 mit einer Füllstandmessvorrichtung gemäß einem weiteren Ausführungsbeispiel der Erfindung. Sowohl der Neigungssensor 4 als auch der Füllstandsensor 5 sind über eigene Leitungen 7 bzw. 6 mit dem Kommunikationsgerät 2 verbunden. Weiterhin ist ein zweiter Füllstandsensor 11 vorgesehen, der so am Behälter 1 angebracht ist, dass eine Ersatzmessung in der Transportlage (wie sie in Fig. 6 dargestellt ist) möglich ist.

Der zweite Füllstandsensor 11 ist über die Leitung 19 mit dem Kommunikationsgerät verbunden, um auf diesen die Messdaten zu übertragen.

Fig. 7 zeigt eine Füllstandmessvorrichtung gemäß einem weiteren Ausführungsbeispiel der Erfindung, welche drei Füllstandsensoren 5, 11 und 12 sowie ein Inklinometer 4 aufweist. In diesem Fall können die Füllstände bei zwei verschiedenen Transportlagen des Behälters 1 gemessen werden (Behälter 90° im Uhrzeigersinn bzw. gegen Uhrzeigersinn verkippt).

Auch können weitere Füllstandsensoren vorgesehen sein.

Fig. 8 zeigt eine Füllstandmessvorrichtung gemäß einem weiteren Ausführungsbeispiel der Erfindung, bei welcher der Füllstandsensor 5 eine stabförmige Sonde 14 aufweist, die in das Füllgut 13 eintaucht. Über den Neigungssensor 4 kann die Behälterneigung gemessen werden. Der Neigungssensor 4 gibt die gemessene Behälterneigung über die Datenleitung bzw. Schnittstelle 16 an den Füllstandsensor 5 weiter. Weiterhin ist eine Auswerteelektronik 15 mit einer Antenne 3 vorgesehen, welche aus den empfangenen Daten den tatsächlichen Füllstand berechnet (wobei die Behälterneigung mit eingerechnet wird).

Das Messergebnis wird dann an den Empfänger übertragen. Alternativ kann die Elektronik15 auch im Empfänger integriert sein, so dass in diesem Fall nur die Rohdaten an den Empfänger übertragen werden.

Wie in Fig. 8 zu sehen, ist der Füllstandsensor 5 mit einem Eingang 16 für das Inklinometer 4 ausgestattet und gibt beide Messsignale (Füllstandmesssignale und Neigungswinkelmesssignale) in digitalisierter Form über eine Busverbindung 20 an die Auswerteeinheit 15 mit der Antenne 3 oder alternativ an ein Kommunikationsgerät 2 weiter.

Fig. 10 zeigt ein Gehäuse 18, in welchem sowohl das Inklinometer 4, als auch der Füllstandsensor 5 inklusiver einer Batterie 17 und einer Antenne 3 integriert sind.

Beispielsweise werden sowohl die Füllstandsinformationen aus der Füllstandmessung als auch die Neigungsinformation (Neigungswinkel in Form eines Stromsignals oder digitalisierten Wertes) direkt an den Server weitergeleitet. Die Auswertung und entsprechend Kennzeichnung "Betriebslage des Behälters ist gültig" bzw. "Betriebslage des Behälters ist ungültig" erfolgt im Server.

Fig. 9 zeigt ein Flussdiagramm eines Verfahrens, bei dem im Schritt 901 erste Messdaten durch einen Füllstandsensor erfasst werden. In einem zweiten Schritt 902 werden zweite Messdaten von einem Lagesensor erfasst. In Schritt 903 wird dann festgestellt, ob die Betriebslage des Behälters für eine Füllstandsbestimmung mit dem Füllstandsensor geeignet ist. Diese Feststellung erfolgt auf Basis der erfassten ersten und zweiten Messdaten.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessvorrichtung zur Bestimmung eines Füllstands in einem mobilen Behälter (1) oder in einem Transportsilo, die Füllstandmessvorrichtung aufweisend:
einen Füllstandsensor (5) zur Erfassung von ersten Messdaten, die mit dem Füllstand in dem Behälter korrespondieren;
einen Lagesensor (4) zur Erfassung von zweiten Messdaten, die mit einer Betriebslage das Behälters korrespondieren;
wobei anhand der zweiten Messdaten feststellbar ist, ob die Betriebslage des Behälters für eine Füllstandsbestimmung mit dem Füllstandsensor geeignet ist.

2. Füllstandmessvorrichtung nach Anspruch 1,
wobei der Lagesensor zum Erfassen eines Neigungswinkels des Behälters ausgeführt ist.

3. Füllstandmessvorrichtung nach Anspruch 1 oder 2, weiterhin aufweisend:
eine Auswerteeinheit (2) zur Bestimmung des Füllstands auf Basis der ersten Messdaten und der zweiten Messdaten.

4. Füllstandmessvorrichtung nach Anspruch 3,
wobei die Auswerteeinheit zur Bestimmung des Füllstands auch bei gekipptem Behälter ausgeführt ist.

5. Füllstandmessvorrichtung nach einem der vorhergehenden Ansprüche,
wobei der Füllstandsensor ausgewählt ist aus der Gruppe bestehend aus Radarsensor, Drucksensor, Ultraschallsensor, Grenzstandsensor, und kapazitiver Sensor.

6. Füllstandmessvorrichtung nach einem der vorhergehenden Ansprüche, weiterhin aufweisend:
eine Kommunikationseinheit (2) zum Übertragen von Messsignalen an einen Empfänger (10), wobei die Messsignale auf den ersten und zweiten Messdaten basieren.

7. Füllstandmessvorrichtung nach Anspruch 6,
wobei der Füllstandsensor eine Schnittstelle (16) zum Anschluss an den Lagesensor aufweist; und
wobei der Füllstandsensor zum Entgegennehmen der zweiten Messdaten von dem Lagesensor und zum Übertragen der Messsignale in digitalisierter Form an den Empfänger (10) ausgeführt ist.

8. Füllstandmessvorrichtung nach einem der Ansprüche 6 oder 7,
wobei der Füllstandsensor, der Lagesensor, die Kommunikationseinheit (2) und eine Batterie (17) zur Energieversorgung in einem Gehäuse (18) integriert sind.

9. Füllstandmessvorrichtung nach einem der vorhergehenden Ansprüche,
wobei eine Auswertung der ersten Messdaten und der zweiten Messdaten im Empfänger erfolgt.

10. Füllstandmessvorrichtung nach einem der vorhergehenden Ansprüche, weiterhin aufweisend:
einen zweiten Füllstandsensor (11), der so am Behälter angeordnet ist, dass er eine Ersatzmessung durchführen kann, wenn die Betriebslage des Behälters für eine Füllstandsbestimmung mit dem ersten Füllstandsensor nicht geeignet ist.

11. Füllstandmesssystem zur Bestimmung eines Füllstands in einem mobilen Behälter oder in einem Transportsilo, das Füllstandmesssystem aufweisend:
eine Füllstandmessvorrichtung nach einem der vorhergehenden Ansprüche,
einen Empfänger (10) zum Empfang von Messsignalen von der Füllstandmessvorrichtung, die auf den ersten und zweiten Messdaten basieren.

12. Füllstandmesssystem nach Anspruch 11,
wobei es sich bei dem Empfänger um einen zentralen Server handelt.

13. Füllstandmesssystem nach Anspruch 11 oder 12,
wobei die Füllstandmessvorrichtung zur Übermittlung der Messsignale an den Empfänger über eine kabellose Verbindung über das Internet ausgeführt ist.

14. Füllstandmesssystem nach einem der Ansprüche 11 bis 13,
wobei die Füllstandmessvorrichtung zur Durchführung mehrer Messzyklen ausgeführt ist; und
wobei die Füllstandmessvorrichtung zu einer paarweisen Abspeicherung der Messsignale aus jedem der Messzyklen und zur darauffolgenden Übermittlung der gesammelten Messsignale an den Empfänger ausgeführt ist.

15. Füllstandmesssystem nach einem der Ansprüche 11 bis 14,
wobei der Empfänger zum Speichern von Füllstandsinformationen und der festgestellten Eignung der Betriebslage des Behälters auf Basis der empfangenen Messsignale zusammen mit einem Zeitstempel ausgeführt ist, so dass ein Benutzer zu einem späteren Zeitpunkt auf alle im Empfänger eingegangenen Füllstandsinformationen zugreifen kann.

16. Verfahren zur Bestimmung eines Füllstands in einem mobilen Behälter oder in einem Transportsilo, das Verfahren aufweisend die Schritte:
Erfassung von ersten Messdaten durch einen Füllstandsensor, wobei die ersten Messdaten mit dem Füllstand in dem Behälter korrespondieren;
Erfassung von zweiten Messdaten, die mit einer Betriebslage das Behälters korrespondieren;
Feststellen anhand der ersten und zweiten Messdaten, ob die Betriebslage des Behälters für eine Füllstandsbestimmung mit dem Füllstandsensor geeignet ist.

## Geänderte Patentansprüche

### Geänderte Patentansprüche gemäss Regel 137(2) EPÜ.

**1.** Füllstandmesssystem zur Bestimmung eines Füllstands in einem mobilen Behälter (1) oder in einem Transportsilo, das Füllstandmesssystem aufweisend:
einen mobilen Behälter (1) oder ein Transportsilo;
einen Füllstandsensor (5) zur Erfassung von ersten Messdaten, die mit dem Füllstand in dem Behälter korrespondieren, und der an dem mobilen Behälter oder dem Transportsilo angebracht ist;
einen Lagesensor (4) zur Erfassung von zweiten Messdaten, die mit einer Betriebslage das Behälters korrespondieren, und der an dem mobilen Behälter oder dem Transportsilo angebracht ist;
eine Kommunikationseinheit (2) zum Übertragen von Messsignalen an einen Empfänger (10), wobei die Messsignale auf den ersten und zweiten Messdaten basieren;
wobei anhand der zweiten Messdaten feststellbar ist, ob die Betriebslage des Behälters für eine Füllstandsbestimmung mit dem Füllstandsensor geeignet ist.

**2.** Füllstandmesssystem nach Anspruch 1,
wobei der Lagesensor (4) zum Erfassen eines Neigungswinkels des Behälters ausgeführt ist.

**3.** Füllstandmesssystem nach Anspruch 1 oder 2, weiterhin aufweisend:
eine Auswerteeinheit zur Bestimmung des Füllstands auf Basis der ersten Messdaten und der zweiten Messdaten.

**4.** Füllstandmesssystem nach Anspruch 3,
wobei die Auswerteeinheit (2) zur Bestimmung des Füllstands auch bei gekippte Behälter ausgeführt ist.

**5.** Füllstandmesssystem nach einem der vorhergehenden Ansprüche,
wobei der Füllstandsensor (5) ausgewählt ist aus der Gruppe bestehend aus Radarsensor, Drucksensor, Ultraschallsensor, Grenzstandsensor, und kapazitiver Sensor.

**6.** Füllstandmesssystem nach einem der vorhergehenden Ansprüche,
wobei der Füllstandsensor (5) eine Schnittstelle (16) zum Anschluss an den Lagesensor aufweist; und
wobei der Füllstandsensor (5) zum Entgegennehmen der zweiten Messdaten von dem Lagesensor und zum Übertragen der Messsignale in digitalisierter Form an den Empfänger (10) ausgeführt ist.

**7.** Füllstandmesssystem nach einem der vorhergehenden Ansprüche,
wobei der Füllstandsensor (5), der Lagesensor (4), die Kommunikationseinheit (2) und eine Batterie (17) zur Energieversorgung in einem Gehäuse (18) integriert sind.

**8.** Füllstandmesssystem nach einem der vorhergehenden Ansprüche,
wobei eine Auswertung der ersten Messdaten und der zweiten Messdaten im Empfänger erfolgt.

**9.** Füllstandmesssystem nach einem der vorhergehenden Ansprüche, weiterhin aufweisend:
einen zweiten Füllstandsensor (11), der so am Behälter angeordnet ist, dass er eine Ersatzmessung durchführen kann, wenn die Betriebslage des Behälters für eine Füllstandsbestimmung mit dem ersten Füllstandsensor nicht geeignet ist.

**10.** Füllstandmesssystem nach einem der vorhergehenden Ansprüche, das Füllstandmesssystem aufweisend:
einen Empfänger (10) zum Empfang von Messsignalen von der Füllstandmessvorrichtung, die auf den ersten und zweiten Messdaten basieren.

**11.** Füllstandmesssystem nach Anspruch 10,
wobei es sich bei dem Empfänger um einen zentralen Server handelt.

**12.** Füllstandmesssystem nach Anspruch 10 oder 11,
wobei die Füllstandmessvorrichtung zur Übermittlung der Messsignale an den Empfänger über eine kabellose Verbindung über das Internet ausgeführt ist.

**13.** Füllstandmesssystem nach einem der Ansprüche 10 bis 12,
wobei die Füllstandmessvorrichtung zur Durchführung mehrer Messzyklen ausgeführt ist; und
wobei die Füllstandmessvorrichtung zu einer paarweisen Abspeicherung der Messsignale aus jedem der Messzyklen und zur darauffolgenden Übermittlung der gesammelten Messsignale an den Empfänger ausgeführt ist.

**14.** Füllstandmesssystem nach einem der Ansprüche 10 bis 13,
wobei der Empfänger zum Speichern von Füllstandsinformationen und der festgestellten Eignung der Betriebslage des Behälters auf Basis der empfangenen Messsignale zusammen mit einem Zeitstempel ausgeführt ist, so dass ein Benutzer zu einem späteren Zeitpunkt auf alle im Empfänger eingegangenen Füllstandsinformationen zugreifen kann.

**15.** Verfahren zur Bestimmung eines Füllstands in einem mobilen Behälter oder in einem Transportsilo, das Verfahren aufweisend die Schritte:
Erfassung von ersten Messdaten durch einen Füllstandsensor, der an dem mobilen Behälter oder dem Transportsilo angebracht ist, wobei die ersten Messdaten mit dem Füllstand in dem Behälter korrespondieren;
Erfassung von zweiten Messdaten durch einen Lagesensor, der an dem mobilen Behälter oder dem Transportsilo angebracht ist, wobei die zweiten Messdaten mit einer Betriebslage das Behälters korrespondieren;
Feststellen anhand der ersten und zweiten Messdaten, ob die Betriebslage des Behälters für eine Füllstandsbestimmung mit dem Füllstandsensor geeignet ist;
Übertragen von Messsignalen an einen Empfänger (10), wobei die Messsignale auf den ersten und zweiten Messdaten basieren.
